(19) Europäisches Patentamt
European Patent Office
Office européen des brevets

(11) **EP 1 831 759 B1**

(12) **EUROPÄISCHE PATENTSCHRIFT**

(45) Veröffentlichungstag und Bekanntmachung des Hinweises auf die Patenterteilung:
**30.01.2013 Patentblatt 2013/05**

(21) Anmeldenummer: **05823842.9**

(22) Anmeldetag: **05.12.2005**

(51) Int Cl.:
***G02F 1/155*** *(2006.01)*

(86) Internationale Anmeldenummer:
**PCT/EP2005/056491**

(87) Internationale Veröffentlichungsnummer:
**WO 2006/072520 (13.07.2006 Gazette 2006/28)**

(54) **ELEKTRONISCHES BAUELEMENT MIT ELEKTRODEN-SCHUTZSCHICHT**

ELECTRONIC COMPONENT COMPRISING AN ELECTRODE PROTECTION LAYER

COMPOSANT ELECTRONIQUE COMPORTANT UNE COUCHE DE PROTECTION D'ELECTRODES

(84) Benannte Vertragsstaaten:
**DE GB**

(30) Priorität: **29.12.2004 DE 102004063289**

(43) Veröffentlichungstag der Anmeldung:
**12.09.2007 Patentblatt 2007/37**

(73) Patentinhaber: **SIEMENS AKTIENGESELLSCHAFT 80333 München (DE)**

(72) Erfinder:
• **RIEGER, Gotthard 91058 Erlangen (DE)**
• **WEISS, Roland 91058 Erlangen (DE)**

(56) Entgegenhaltungen:
**US-A- 4 240 713      US-A- 5 585 958**

• **PATENT ABSTRACTS OF JAPAN Bd. 003, Nr. 145 (E-155), 30. November 1979 (1979-11-30) -& JP 54 123966 A (SANYO ELECTRIC CO LTD), 26. September 1979 (1979-09-26)**
• **PATENT ABSTRACTS OF JAPAN Bd. 005, Nr. 046 (P-054), 27. März 1981 (1981-03-27) & JP 56 001920 A (MATSUSHITA ELECTRIC IND CO LTD), 10. Januar 1981 (1981-01-10)**
• **PATENT ABSTRACTS OF JAPAN Bd. 006, Nr. 168 (P-139), 2. September 1982 (1982-09-02) & JP 57 085027 A (SEIKO EPSON CORP), 27. Mai 1982 (1982-05-27)**

**Beschreibung**

Die Erfindung betrifft ein elektronisches Bauelement, insbesondere ein elektrochromes Bauelement mit einer Schutzschicht über zumindest einer der Elektroden.

Bekannt sind elektrochrome Bauelemente beispielsweise aus der WO 2004/026012 und aus der WO 2004/051750 mit einem Aufbau, der zumindest ein Substrat, eine untere Elektrodenschicht, eine oder mehrere organische aktive Schicht(en) und eine obere, zumindest semitransparente Elektrodenschicht umfasst.

Die US 4 240 713 A beschreibt eine elektrochrome Anzeigeeinheit mit einer transparenten ersten Substratschicht, welche selektiv aktivierbare, transparente Metalloxidelektroden aufweist. Die elektrochrome Anzeigeeinheit weist ferner mit den Metalloxidelektroden steuerbare elektrochrome Schichten auf. Ferner umfasst die elektrochrome Anzeigeeinheit eine zweite, mit einer Gegenelektrode versehene Substratschicht mit einer Ionen-leitenden Schicht zwischen den beiden Substratschichten.

Bei der dort beschrieben elektrochromen Anzeigeeinheit ist zwischen den Metalloxidelektroden und ihren zugeordneten elektrochromen Schichten eine transparente, für Elektronen durchlässige und für atomaren Wasserstoff zumindest weitgehend undurchlässige Wasserstoffsperrschicht vorgesehen.

Die zumindest eine elektroaktive Schicht umfasst in der Regel einen Elektrolyten und ein elektrochromes Material, unter Umständen auch ein pH-aktives Material.

Problematisch an den bekannten elektrochromen Bauelementen ist allerdings deren geringe Betriebsdauer oder Lebensdauer des Gerätes. Dies liegt zum Teil daran, dass bei dem bekannten Aufbau innerhalb der elektroaktiven Schicht durch üblicherweise vorhandenes Wasser und freien Sauerstoff, Protonensäure und/oder Wasserstoff freigesetzt wird, das an der Elektrodengrenzschicht entsteht und unter bzw. in die Schichten diffundiert und diese Schicht(en) chemisch aber durch Gasbildung auch mechanisch beschädigt.

Aufgabe der Erfindung ist deshalb, einen Aufbau für ein elektrochromes Bauelement zur Verfügung zu stellen, der die Lebensdauer des gesamten Bauteils wirksam verlängert ohne die guten Eigenschaften der elektroaktiven Schicht und/oder der hochleitfähigen Elektrolytschichten zu beeinträchtigen.

Gegenstand der Erfindung ist ein elektronisches Bauelement, zumindest eine elektroaktive Schicht zwischen zwei leitfähigen Elektrodenschichten umfassend. Ferner ist das elektronische Bauelement derart ausgebildet, dass zumindest zwischen einer der Elektrodenschichten und zumindest einer elektroaktiven Schicht eine Elektrodenschutzschicht angeordnet ist.

Die Elektrodenschutzschicht kann sowohl einseitig als auch beidseitig angeordnet sein. Es können also innerhalb des Bauelements ein, zwei oder mehrere Elektrodenschutzschichten vorliegen.

Als elektronisches Bauelement kommen im Sinne der Erfindung grundsätzlich alle bekannten Bauelemente in Frage, insbesondere solche, die vorwiegend aus organischem Material aufgebaut sind, also photovoltaische Bauelemente, Leuchtdioden, Photodetektoren und schließlich elektrochrome Bauelemente, deren Entwicklung bei der Erfindung im Vordergrund standen. Dabei umfasst der Begriff "organisches Material" oder "Funktionspolymer" oder "Polymer" hier alle Arten von organischen, metallorganischen und/oder organisch-anorganischen Kunststoffen (Hybride), insbesondere die, die im Englischen z.B. mit "plastics" bezeichnet werden. Es handelt sich um alle Arten von Stoffen mit Ausnahme der Halbleiter, die die klassischen elektronischen Bauelemente bilden (Germanium, Silizium), und der typischen metallischen Leiter. Eine Beschränkung im dogmatischen Sinn auf organisches Material als Kohlenstoff enthaltendes Material ist demnach nicht vorgesehen, vielmehr ist auch an den breiten Einsatz von z.B. Siliconen gedacht. Weiterhin soll der Term keiner Beschränkung im Hinblick auf die Molekülgröße, insbesondere auf polymere und/oder oligomere Materialien unterliegen, sondern es ist durchaus auch der Einsatz von "small molecules" möglich. Der Wort-Bestandteil "polymer" im Funktionspolymer ist historisch bedingt und enthält insofern keine Aussage über das Vorliegen einer tatsächlich polymeren Verbindung.

Der Begriff "Bauelement, vorwiegend aus organischem Material" wiederum soll nicht ausschließen, dass auch andere Materialien, insbesondere bei der Verkapselung, beim Substrat und/oder in den Elektrodenschichten eingesetzt werden.

Als elektroaktives Material kommen hier alle organischen halbleitenden und/oder optisch aktiven Substanzen in Frage, insbesondere optisch oder photovoltaisch aktive und/oder elektrochrome Materialien, letztere beispielsweise wie sie aus der US 6,639,709 bekannt sind. Des Weiteren sind elektrochrome Farbsysteme Polyanilin (PANI), PEDOT oder Derivate davon, Vinologene oder weitere konjugierte polymere, oligomere oder molekulare Farbsysteme, die ihre Farbe je nach REDOX-Zustand ändern können.

Ein bevorzugtes Beispiel für ein elektronisches Bauelement nach der Erfindung ist ein elektrochromes Matrix Display.

Displays auf Basis elektrochromer Materialien zeichnen sich durch die Möglichkeit aus, den Schichtaufbau aus Backelektrode, elektrochromer Schicht und Sichtelektrode sehr einfach zu gestalten. Durch die geringe Gesamtdicke der SandwichStruktur wird dabei größte Flexibilität und Biegefähigkeit erreicht. Die Sicht- und Gegenelektrode umfassen in der Regel Kunststoff-Träger-Folien, die mit leitfähigem Material beschichtet sind.

Die Sicht-Elektrode (obere Elektrode) ist dabei als transparente, elektrisch leitfähige Elektrode auf einem ebenfalls transparenten Träger ausgelegt. Wird beispielsweise ein pH-aktives elektrochromes Materialsystemen verwendet, beginnt die Verfärbung des pH Farbstoffs (Indikators) direkt unterhalb dieser Sichtelektrode und wird zunächst in geringer Tiefe (~10pm) verstärkt.

Zum Aufbau eines Matrix-Displays für die Darstellung komplexer Bilder kann auf eine technisch schwierige und kostenintensive Strukturierung der elektrochromen Schicht verzichtet werden, wenn Back- und Sichtelektrode als gekreuzte Linienstrukturen ausgelegt sind. In der Regel wird darauf ausgewichen, damit die Technik wirtschaftlich interessant ist.

Als inerte Backelektroden bei optisch aktiven elektronischen Bauelementen werden üblicherweise Edelmetalle wie Gold eingesetzt. Kommt das pH-aktive elektrochrome Material in Kontakt mit diesen Elektroden, können an diesen unerwünschte Sekundärreaktionen, z.B. Elektrolyse und Bildung von Wasserstoff auftreten. Das Material kann zusätzlich an den Zwischenräumen in Kontakt mit dem Substratmaterial kommen, das unter Umständen wasserhaltig ist (speziell Polyimid, das häufig in der gesamten Elektronik als flexibles Substrat eingesetzt wird).

Daher ist es anzustreben, die strukturierten Leiterbahnen der Backelektrode ganzflächig zu schützen ohne durch eine zu hohe Querleitfähigkeit dieser Schicht ein Übersprechen auf Seiten der Backelektrode zu erzeugen.

Bei Anlegen einer Spannung zwischen Back- und Sichtelektrodenstruktur, sollte die Farbänderung optisch möglichst scharf umrissen an deren Überschneidungsflächen auftreten, also ein Übersprechen nach Möglichkeit verhindert werden.

Die Elektrodenschutzschicht nach der Erfindung ist zwischen der/den elektroaktiven Schicht(en) und einer Elektrode angeordnet und verhindert, dass das Material der aktiven Schicht(en) oder ein Zersetzungsprodukt des Materials, das sich mit der Zeit bildet, die Elektroden entweder chemisch angreift und/oder mechanisch schädigt.

Gleichzeitig soll die Elektrodenschutzschicht jedoch keine Leitfähigkeitsbarriere bilden, so dass die Funktionalität des Bauelements durch das Anbringen der Schutzschicht in keiner Weise eingeschränkt wird.

Dazu ist es erforderlich, dass die Schutzschicht in der Leitfähigkeit an die elektroaktiv(n) Schichten angepasst ist und keinen übermäßigen Potentialverlust bewirkt.

Deshalb ist die Elektrodenschutzschicht bevorzugt nicht nur in der Leitfähigkeit an die elektroaktive Schicht angepasst, sondern sie sollte nach einer bevorzugten Ausführungsform auch eine möglichst geringe Querleitfähigkeit haben, so dass sie nach einer besonders bevorzugten Ausführungsform erstens keinen starken senkrechten Spannungsabfall bewirkt, zweitens ein Übersprechen zumindest nicht verstärkt, also eine möglichste geringe Querleitfähigkeit hat und drittens eine Feuchte und/oder Gasbarriere bildet.

Durch Einarbeitung der Elektrodenschutzschicht, bevorzugt mit angepasster Leitfähigkeit, wird die resistive Kopplung zwischen benachbarten Bahnen bei chemischer Schutzfunktion in einem elektrisch und optisch sinnvollen Bereich gehalten. Eine Anpassung der Leitfähigkeit kann durch anisotrop leitfähige Materialien, Tunnelbarrieren für elektronisches Tunneln und/oder durch die Entkopplung von Querleitfähigkeit und senkrechter Leitfähigkeit beträchtlich erleichtert werden. In der praktischen Ausführung kann dies durch Einsatz von Verbundwerkstoffen, die eine definierte und/oder anisotrope elektrische Leitfähigkeit aufweisen, erfolgen. Als Tunnelbarrieren kommen dünne Isolatoren z.B. Metalloxide in Frage.

Als Materialien für die Elektrodenschutzschicht kommen daher insbesondere Verbundwerkstoffe mit anisotroper Leitfähigkeit in Frage, insbesondere ist an den Einsatz von polymeren Dickfilmpasten auf Kohlenstoff-Basis, etwa mit <u>Carbon-Black</u>, Siliziumcarbid (dotiert), Silberleitpasten, Graphit und/oder Graphitleitpasten, leitfähige Keramiken oder ähnliches gedacht. Bevorzugt ragen bei geeigneter Wahl des Beschichtungsverfahrens und/oder der Partikelgröße im Hinblick auf die Schichtdicke der Elektrodenschutzschicht die leitfähigen, chemisch inerten Partikel in die elektroaktive Schicht und vermitteln dadurch die elektrische Leitung zwischen hochleitfähiger strukturierter Elektrode und elektroaktiver Schicht bei gleichzeitig geschlossener Elektrodenschutzschicht.

Die möglichen Herstellprozesse für die Elektrodenschutzschicht umfassen alle Schichtabscheidungs-Verfahren (z. B. Drucktechniken, Sputtern, Aufdampfen, Spin-Coating, Sol-Gel, Sprühverfahren etc.). Darüber hinaus kommen Oberflächen-Passivierungsverfahren wie Eloxieren und/oder Verfahren, die geeignet sind Isolatoren im Nanometer-Bereich als geschossene Schichten abzuscheiden, in Frage.

Die Elektrodenschutzschicht wird auf die strukturierte(n) und/oder streifenförmig vorliegenden Elektroden ganzflächig aufgetragen, wobei sie nicht nur die Elektroden schützt, sondern auch eine, bevorzugt gegen Feucht und/oder Gas, insbesondere bevorzugt gegen Sauerstoff und/oder Wasser dichte Barriere zwischen dem Substrat und der/den elektroaktiven, bevorzugt organischen Schicht(en) bildet.

Die beiden leitfähigen Elektrodenschichten können sowohl aus organischem als auch aus anorganischem oder sogar metallischem Material sein, wobei auch Laminate oder Elektroden, die mehrere Schichten umfassen, denkbar sind. Als Metalle sind dabei z.B. Gold, Kupfer und/oder Aluminium denkbar, wobei die metallischen oder organischen Schichten bevorzugt strukturiert sind.

Die obere Elektrode ist zumindest semitransparent oder transparent und kann beispielsweise Materialien wie Indium Tin Oxide (ITO), ITO-Metall-ITO Laminat (so genannte IMI-Schicht) eine dünne Metallfolie (z.B. Gold, Silber...) und/oder Titannitrid umfassen.

Die beiden Elektrodenschichten sind in der Regel hochleitfähige Schichten (mit einem durchschnittlichen spez. Widerstand von weniger als 1000μOhmcm, bevorzugt weniger als 600μOhmcm und insbesondere bevorzugt weniger als 200μOhmcm) und bevorzugt strukturiert, also beispielsweise in Streifen vorliegend.

Im Folgenden wird die Erfindung noch anhand dreier Figuren, die ausgewählte Ausführungsbeispiele zeigen, näher erläutert:

Figur 1, aufgeteilt in die Figuren 1,1; 1,2; 1,3 und 1,4 zeigt den schematischen Aufbau eines elektronischen Bauelements mit einer geschlossenen Elektrodenschutzschicht an der unteren(Back-) Elektrode.

Figur 2 zeigt ein Detail aus Figur 1 den Querschnitt durch ein elektronisches Bauelement mit Elektrodenschutzschicht, wobei einmal eine Elektrodenschutzschicht an der unteren Elektrode und einmal eine Elektrodenschutzschicht an der oberen Elektrode gezeigt wird.

Figur 3 schließlich zeigt eine Graphik, in der die Querleitfähigkeit und die senkrechte Leitfähigkeit in Abhängigkeit von der Dicke und der Leitfähigkeit der Schutzschicht dargestellt werden.

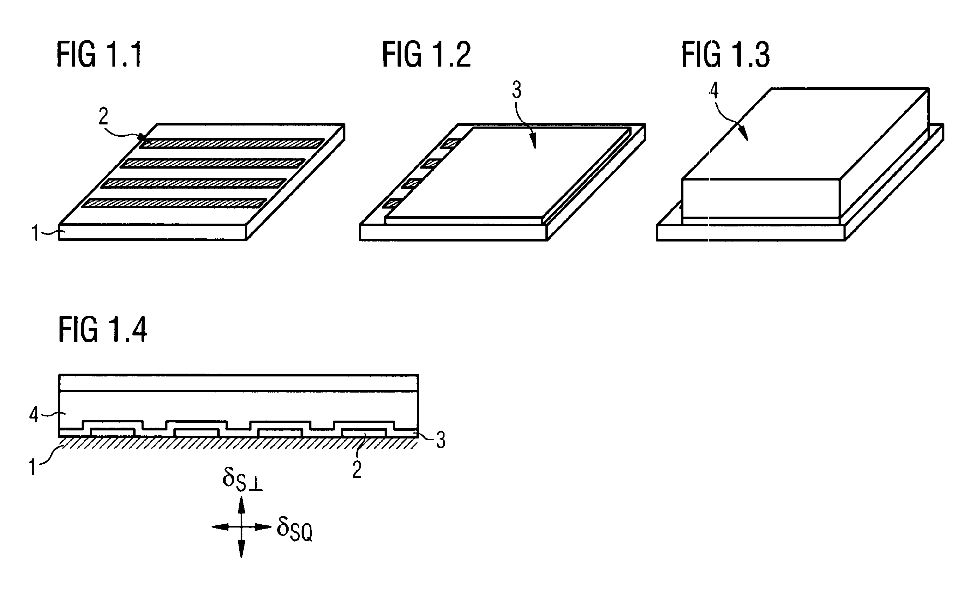

In Figur 1,1 ist das Substrat 1 mit der strukturierten Elektrodenschicht 2 darauf zu erkennen. Die Elektrodenschicht liegt als hochleitfähiger Streifenleiter 2 vor. Das Substrat 1 ist beispielsweise eine flexible Folie, dünnes Glas, Polyimid, Polyether, PET, PSS, PMMA Polymethacrylat (Plexiglas), PC und/oder Silicon.

Die hochleitfähige Elektrodenschicht 2 ist beispielsweise aus einem leitfähigen organischen Material wie PANI oder PEDOT, kann aber auch metallisch sein, beispielsweise aus einem Metall oder einer Legierung mit Gold, Kupfer und/oder Aluminium. Die hochleitfähige Elektrodenschicht 2 ist bevorzugt strukturiert, insbesondere bevorzugt streifenförmig strukturiert.

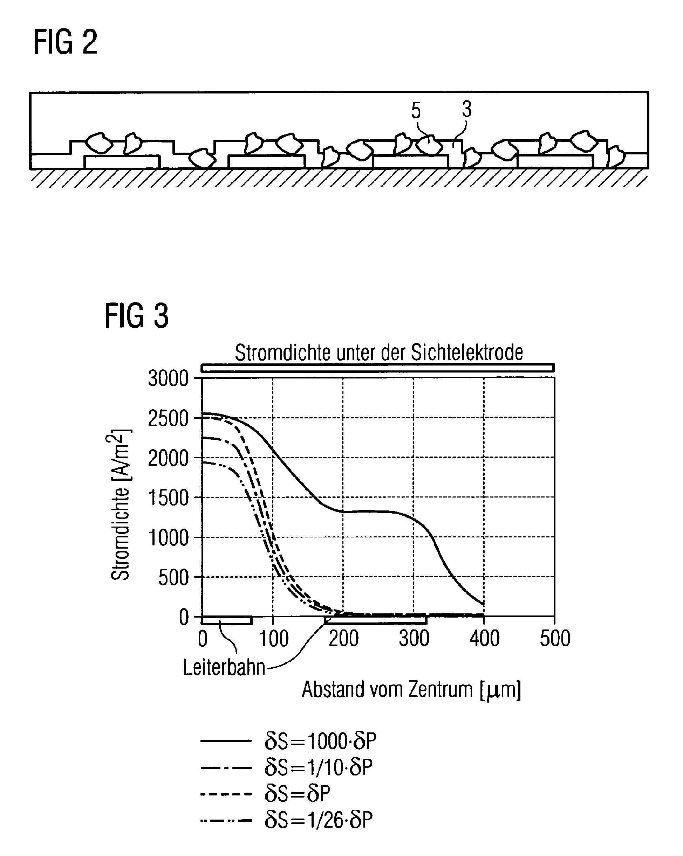

In Figur 1,2 ist zu erkennen, wie eine durchgehende, also geschlossene Elektrodenschutzschicht 3 auf die strukturierte hochleitfähige Elektrodenschicht aufgebracht wird. Zu erkennen ist, dass die Elektrodenschutzschicht zum einen die hochleitfähige Elektrodenschicht 2 und zum anderen in den Bereichen zwischen den einzelnen Streifen des hochleitfähigen Streifenleiters 2 das Substrat 1 bedeckt und/oder versiegelt. Zwar wird hier eine durchgehende und geschlossene Elektrodenschutzschicht gezeigt, es kann sich aber auch als sinnvoll erweisen, dass die Elektrodenschutzschicht nur Bereiche der unteren Schichten also beispielsweise nur die Streifenleiter selbst oder Teile der Streifenleiter und/oder des Substrats abdeckt und/oder versiegelt.

Die Elektrodenschutzschicht 3 wird beispielsweise durch einfache und bekannte Drucktechniken, Sputtern, Aufdampfen, Spin-Coating, Sol-Gel-Verfahren, Sprüh-Verfahren, etc. aufgebracht.

Auf die Elektrodenschutzschicht wird, wie in Figur 1,3 gezeigt, die aktive Schicht 4 aus organischem Material aufgebracht, beispielsweise eine elektrochrome Paste mit geringer Leitfähigkeit.

In Figur 1,4 ist zu erkennen, wie ein Querschnitt des in den Figuren 1,1 bis 1,3 beschriebenen Aufbaus aussieht. Zu erkennen ist wieder die aktive Schicht 4, darunter die Elektrodenschutzschicht 3, darunter die strukturierte hochleitfähige Elektrodenschicht 2.

In Figur 2 ist der gleiche Schichtaufbau wie er aus Figur 1,4 bekannt ist, zu sehen. Dabei sind, zur Erhöhung der senkrechten Leitfähigkeit anisotrop leitende Partikel 5 (hier stark vergrößert gezeichnet), beispielsweise Ruß, wie er in Carbon Black vorliegt, in die Elektrodenschutzschicht 3 eingearbeitet. Die Größe der Kohlenstoff-Partikel wird bevorzugt so gewählt, dass die Partikel über die Elektrodenschutzschicht 3 hinausragen und damit eine direkte elektrische Leitung zwischen der aktiven organischen Schicht 4 und der hochleitfähigen Elektrodenschicht 2 herstellen.

In dem in den Figuren gezeigten Ausführungsbeispiel wird nur die Elektrodenschutzschicht 2 an der Backelektrode gezeigt, jedoch ist es ebenso im Sinne der Erfindung, dass die Sichtelektrode, also die obere, zumindest semitransparente Elektrode, auch durch eine Elektrodenschutzschicht vor unerwünschten Nebenreaktionen durch direkten Kontakt des aktiven organischen Materials mit der hochleitfähigen Schicht geschützt wird. Dabei werden als Material für die obere Elektrodenschutzschicht beispielsweise verschiedene transparente leitende Oxide in Dünnfilmtechnik aufgebracht, beispielsweise Mischoxide wie Kupfer-Aluminium-Oxid ($CuAlO_2$), Kupfer-Gallium-Oxid ($CuGaO_2$), Strontium-Kupfer-Oxid ($SrCu_2O_2$) und/oder Silber-Indium-Oxid ($AgInO_2$) deren Leitfähigkeiten etwa von Kawazoe et al. in MRS Bulletin/August 2000 untersucht und publiziert wurden. Besonders gut leitfähig sind demnach Kupfer-Gallium-Oxid ($CuGaO_2$), Strontium-Kupfer-Oxid ($SrCu_2O_2$).

In Figur 3 schließlich ist eine Graphik gezeigt, die den Zusammenhang zwischen der Dicke der Elektrodenschutzschicht 2 und der Leitfähigkeit der Elektrodenschutzschicht 2, insbesondere im Hinblick auf die Leitfähigkeit der aktiven organischen Schicht, zeigt.

Daraus ergibt sich erstens, dass, um das Übersprechen in einem erträglichen Rahmen zu halten, die Querleitfähigkeit möglichst gering sein sollte,

$$d_S \cdot \delta_{SQ} << d_P \cdot \delta_P$$

Andererseits, um die Verlustleistung im Display gering zu halten, darf der Spannungsabfall an der Schicht nicht zu groß werden. Die senkrechte Leitfähigkeit des Schichtsystems ist bevorzugt möglichst groß.

$$\Delta U_S \approx U \cdot \frac{\delta_P}{\delta_{S\perp}} \frac{d_S}{d_P} \quad \Delta U_S < U$$

mit

$d_P$     Dicke der aktiven Schicht 4

$d_S$     Dicke der Elektrodenschutzschicht 3

$\delta_P$     Spezifischer Leitwert der aktiven Schicht 4

$\delta_S$     Spezifischer Leitwert der Elektrodenschutzschicht 3

Die Graphik zeigt bei einem elektrochromen Matrix Display mit Elektrodenschutzschicht eine Simulation und Abschätzung wie verschiedene Schichtdicken der Elektrodenschutzschicht 3 und verschiedene Leitfähigkeiten der Elektrodenschutzschicht 3 sich auf das Gesamtsystem auswirken.

Mit der Graphik hat sich dabei gezeigt, dass, wenn die Leitfähigkeit der Elektrodenschutzschicht 3 der Leitfähigkeit der aktiven organischen Schicht möglichst optimal angepasst ist, also für isotrop leitfähige Schichten in erster Näherung die beiden Werte identisch sind, die beiden Bedingungen: geringe Querleitfähigkeit und hohe senkrechte Leitfähigkeit am besten erfüllt sind.

$$\delta_{SQ} = \delta_{S\perp}$$

$\delta_{SQ}$     Spezifischer Leitwert parallel zur Oberfläche

$\delta_{S\perp}$     Spezifischer Leitwert senkrecht zur Oberfläche

Damit ist es bevorzugt, wenn der Leitwert für isotrop leitfähige Schichten folgende Bedingung erfüllt:

$$\frac{d_P}{d_S} \cdot \delta_P \gg \delta_S > \delta_P \cdot \frac{d_S}{d_P}$$

Bei anisotrop leitfähigen Materialien zu welchen auch Tunnelbarrieren gehören kann eine hohe senkrechte Leitfähigkeit bei geringer Querleitfähigkeit direkt durch die Anisotropie der spezifischen Leitwerte erreicht werden:

$$\delta_{SQ} \ll \frac{d_P}{d_S} \cdot \delta_P \;\; ; \;\; \delta_{S\perp} > \delta_P \cdot \frac{d_S}{d_P}$$

Die Querleitfähigkeit und die senkrechte Leitfähigkeit der Schicht können weitgehend unabhängig von einander optimiert werden so das hier die Randextremas der spezifischen Leitwerte senkrecht bzw. parallel zur Schicht als Optimierungsziel in Frage kommen.

$$\delta_{SQ} \leq \delta_{S\perp}$$

Die Vorteile der Erfindung liegen vor allem im Bereich der chemischen Stabilisierung der Elektroden und der elektrochromen Schichten durch Einsatz von Schutzschichten (Kapselung ) in Matrix-Displays. Mit der Anpassung der Leitfähigkeit der Schicht (Reduzierung der Querleitfähigkeit bei ausreichend hoher senkrechter Leitfähigkeit) wird ein Übersprechen im Display vermieden. Diese Kontaktschichten zum elektrochromen Material erhöhen den Freiheitsgrad bei der Materialauswahl für Elektroden und Substrate und stellen damit reproduzierbare Eigenschaften auf unterschiedlichsten Trägermaterialien und Elektroden sicher. Insgesamt werden durch die vorgesehene Schutzschicht die elektrischen und optischen Eigenschaften bei Dauerbelastung verbessert und die vorteilhaften Eigenschaften des Displays (Bruchstabilität, Flexibilität usw.) beibehalten.

Die Erfindung betrifft ein elektronisches Bauelement, insbesondere ein elektrochromes Bauelement mit einer Schutzschicht über zumindest einer der Elektroden, wobei die Elektrodenschutzschicht eine geringe Querleitfähigkeit mit einer hohen senkrechten Leitfähigkeit kombiniert.

**Patentansprüche**

1. Elektronisches Bauelement, zumindest eine elektroaktive Schicht (4) zwischen zwei leitfähigen Elektrodenschichten (2) umfassend, wobei zumindest zwischen einer der Elektrodenschichten (2) und zumindest der einen elektroaktiven Schicht (4) eine Elektrodenschutzschicht (3) angeordnet ist, **dadurch gekennzeichnet, dass** die Elektrodenschutzschicht (3) und die zumindest eine elektroaktive Schicht (4) isotrop leitfähig sind und wobei die Elektrodenschutzschicht (3) in ihrer Leitfähigkeit an die zumindest eine elektroaktive Schicht (4) derart angepasst ist, dass der spezifische Leitwert der Elektrodenschutzschicht (3) identisch mit dem spezifischen Leitwert der zumindest einen elektroaktiven Schicht (4) ist.

2. Elektronisches Bauelement nach Anspruch 1, **dadurch gekennzeichnet, dass** die elektroaktive Schicht (4) eine organische Schicht ist.

3. Elektronisches Bauelement nach einem der vorstehenden Ansprüche, **dadurch gekennzeichnet, dass** die Elektrodenschutzschicht (3) leitfähige Partikel (5) umfasst.

**4.** Elektronisches Bauelement nach Anspruch 3, **dadurch gekennzeichnet, dass** ein erheblicher Teil der leitfähigen Partikel (5) so groß ist, dass eine elektrisch leitende Verbindung durch die Elektrodenschutzschicht (3) hindurch von der elektroaktiven Schicht (4) zu der leitfähigen Elektrodenschicht (2) herstellbar ist.

**5.** Elektronisches Bauelement nach einem der vorstehenden Ansprüche, **dadurch gekennzeichnet, dass** die Elektrodenschutzschicht (3) Russpartikel umfasst.

**Claims**

**1.** Electronic component, comprising at least one electroactive layer (4) between two conductive electrode layers (2), wherein an electrode protective layer (3) is arranged at least between one of the electrode layers (2) and at least the one electroactive layer (4), **characterized in that** the electrode protective layer (3) and the at least one electroactive layer (4) are isotropically conductive, and wherein the electrode protective layer (3) is adapted to the at least one electroactive layer (4) in terms of its conductivity in such a way that the specific conductance of the electrode protective layer (3) is identical to the specific conductance of the at least one electroactive layer (4).

**2.** Electronic component according to Claim 1, **characterized in that** the electroactive layer (4) is an organic layer.

**3.** Electronic component according to either of the preceding claims, **characterized in that** the electrode protective layer (3) comprises conductive particles (5).

**4.** Electronic component according to Claim 3, **characterized in that** a considerable portion of the conductive particles (5) is so large that an electrically conducting connection can be produced through the electrode protective layer (3) from the electroactive layer (4) to the conductive electrode layer (2).

**5.** Electronic component according to any of the preceding claims, **characterized in that** the electrode protective layer (3) comprises carbon black particles.

**Revendications**

**1.** Composant électronique comprenant au moins une couche ( 4 ) électro-active entre deux couches ( 2 ) d'électrode conductrices, dans lequel une couche ( 3 ) de protection d'électrode est disposée au moins entre l'une des couches ( 2 ) d'électrode et au moins la une couche ( 4 ) électro-active, **caractérisé en ce que** la couche ( 3 ) de protection d'électrode et la au moins une couche ( 4 ) électro-active sont conductrices d'une manière isotrope et dans lequel la couche ( 3 ) de protection d'électrode est adaptée dans sa conductivité à la au moins une couche ( 4 ) électro-active de manière à ce que la conductance spécifique de la couche ( 3 ) de protection d'électrode soit identique à la conductance spécifique de la au moins une couche ( 4 ) électro-active.

**2.** Composant électronique suivant la revendication 1, **caractérisé en ce que** la couche ( 4 ) électro-active est une couche organique.

**3.** Composant électronique suivant l'une des revendications précédentes, **caractérisé en ce que** la couche ( 3 ) de protection d'électrode comprend des particules ( 5 ) conductrices.

**4.** Composant électronique suivant la revendication 3, **caractérisé en ce qu'**une partie considérable des particules ( 5 ) conductrices est si grande qu'une liaison conductrice de l'électricité à travers la couche ( 3 ) de protection d'électrode peut être ménagée de la couche ( 4 ) électro-active à la couche ( 2 ) d'électrode conductrice.

**5.** Composant électronique suivant l'une des revendications précédentes, **caractérisé en ce que** la couche ( 3 ) de protection d'électrode comprend des particules de suie.

FIG 1.1

2

1

FIG 1.2

3

FIG 1.3

4

FIG 1.4

4

1

3

2

$\delta_{S\perp}$

$\delta_{SQ}$

EP 1 831 759 B1

# FIG 2

# FIG 3

Stromdichte unter der Sichtelektrode

Abstand vom Zentrum [μm]

Leiterbahn

——— $\delta S = 1000 \cdot \delta P$

—·— $\delta S = 1/10 \cdot \delta P$

----- $\delta S = \delta P$

··—··— $\delta S = 1/26 \cdot \delta P$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004026012 A
- WO 2004051750 A
- US 4240713 A
- US 6639709 B